# EUROPÄISCHE PATENTSCHRIFT

(11) **EP 2 016 742 B1**
(45) Veröffentlichungstag und Bekanntmachung des Hinweises auf die Patenterteilung: **02.12.2009**
(21) Anmeldenummer: 06792984.4
(22) Anmeldetag: 24.08.2006
(51) Int. Cl.: H04L 29/08, H04L 29/06, H04M 3/51

(54) **VERFAHREN UND VORRICHTUNG ZUM AUFBAU EINER THEMENBEZOGENEN KOMMUNIKATIONSVERBINDUNG**
METHOD AND DEVICE FOR ESTABLISHING A SUBJECT-RELATED COMMUNICATION LINK
PROCEDE ET DISPOSITIF PERMETTANT D'ETABLIR UNE LIAISON DE COMMUNICATION LIEE A UN THEME

(30) Priorität: 09.09.2005 DE 102005043041
(43) Veröffentlichungstag der Anmeldung: 21.01.2009
(73) Patentinhaber: Nokia Siemens Networks GmbH & Co. KG, 81541 München (DE)
(72) Erfinder: MAIERHOFER, Christian, A-3180 Lilienfeld (AT)
(86) Internationale Anmeldenummer: PCT/EP2006/065643
(87) Internationale Veröffentlichungsnummer: WO 2007/028722

(56) Entgegenhaltungen:
- EP-A2- 1 555 798
- WO-A-00/25238
- US-A1- 2002 021 792
- US-A1- 2005 128 961
- US-B1- 6 442 592

## Beschreibung

Die Erfindung bezieht sich auf ein Verfahren gemäß dem Oberbegriff des Patentanspruchs 1.

Ein solches Verfahren ist aus der WO 00/25238 A bekannt.

Aus der EP 1 555 798 A2 ist ein Routingverfahren für ein Call Center bekannt, bei dem anruferspezifische Informationen für die Rufannahme bereit gestellt werden.

Als Kommunikation wird auf der menschlichen Alltagsebene ein wechselseitiger Austausch von Informationen in Form von Sprache, Schrift oder Bild verstanden.

In der Informationstechnologie und in der Nachrichtentechnik ist der Begriff Kommunikation durch das so genannte Sender-Empfänger-Modell geprägt. Die Informationen werden dabei in Zeichen kodiert und dann von einem Sender an einem Ort über einen Übertragungskanal zu einem Empfänger an einem anderen Ort übertragen. Dieser Vorgang wird auch als Informationsübertragung bezeichnet, wobei die Übertragung von Information häufig nicht nur unidirektional - also nur in eine Richtung vom Sender zum Empfänger - sondern auch bidirektional erfolgen kann. Das heißt, die Kommunikation wird in zwei Richtungen ermöglicht, wobei jeder der beiden Teilnehmer sowohl als Sender wie auch als Empfänger auftritt.

Der Übertragungskanal ist dabei eine logische Verbindung, die mit Hilfe von verschiedenen Ressourcen (wie z.B. Vermittlungsstellen, Schnittstellensystemen, Router, funktechnologischen Komponenten, etc.) und auf einem bestimmten Medium wie beispielsweise Draht, Luft, etc. realisiert wird. Diese logische Verbindung, die zum Austausch von Informationen zwischen einem Sender und einem Empfänger genutzt wird, wird auch als Kommunikationsverbindung bezeichnet.

Alle Ressourcen - wie beispielsweise Vermittlungsstellen, Schnittstellensysteme, Router, Gateways, funktechnologische Komponenten, Kabel, etc. die zum Übermitteln von Informationen über räumliche oder zeitliche Distanz - also für den Aufbau von Kommunikationsverbindungen geeignet sind, werden unter dem Oberbegriff Kommunikationsnetz zusammengefasst. Durch ein Kommunikationsnetz werden voneinander entfernte Netzzugangspunkte, durch die das Kommunikationsnetz von den Teilnehmern (Sender, Empfänger) genutzt werden kann, miteinander verbunden.

Kommunikationsnetze sind beispielsweise:
- Telekommunikationsnetze, die als leitungsvermittelnde Netze ausgeführt sind. Bei Telekommunikationsnetzen kann außerdem z.B. zwischen dem vermittelten Telefonnetz oder Public Switched Telephone Network PSTN, dem digitalen Telekommunikationsnetz oder Integrated Service Digital Network ISDN und dem Public Land Mobile Network PLMN, bei welchem der Netzzugang über Funkkanäle hergestellt wird, unterschieden werden.
   Als Netzzugangspunkte werden von den Teilnehmern eines Telekommunikationsnetz so genannte Telekommunikationsendgeräte benutzt, die entweder wie z.B. bei PSTN oder ISDN über Kabel fest mit dem Telekommunikationsnetz verbunden sind oder von denen wie im Fall des PLMN kabellose Funkkanäle für den Netzzugang verwendet werden können.
   Bei den Teilnehmern an einer Kommunikationsverbindung in einem Telekommunikationsnetz kann zwischen einem so genannten anrufenden Teilnehmer, durch den die Kommunikationsverbindung eingeleitet wird, und einem so genannten angerufenen Teilnehmer unterschieden werden.
- Paketorientierte Netze wie beispielsweise Datennetze oder als spezielle Form davon Netze, welche auf dem Transportprotokoll Internet Protocol IP basieren und neben der Datenübertragung mittlerweile auch für die Übertragung von Sprache eingesetzt werden, wobei für den Aufbau der Kommunikationsverbindung spezielle Protokoll wie beispielsweise das Session Initiation Protocol SIP oder H.323 zum Einsatz kommen. Als Netzzugangspunkte zu einem paketorientierten Netz werden meist elektronische Rechner oder so genannte Computer verwendet, die meist mittels Kabel und über spezielle Protokolle an das paketorientierte Netze angebunden sind.

Von Endgeräten wie z.B. Telekommunikationsendgeräten, Computern ,etc. aus können von den Teilnehmern Dienste mit Dienstmerkmalen zu Kommunikationszwecken in Anspruch genommen werden. Solche von Kommunikationsnetzen zur Verfügung gestellten Dienste sind dabei z.B. die Übertragung von Daten (z.B. Electronic Mail, etc.) oder die Übertragung von Sprache (z.B. Sprachtelefonie, IP-Telefonie in paketorientierten Netzen, etc.) von einem Endgerät zu einem anderen Endgerät, damit zwischen diesen Informationen ausgetauscht werden können. Dabei kann allerdings nicht jeder Dienst von jedem Endgerät aus genutzt werden. So ist es für die Nutzung der IP-Telefonie notwendig, dass das Endgerät, z.B. der Computer, mit bestimmten zur Sprachübertragung geeigneten Komponenten ausgestattet ist.

Für die Übertragung von Daten und zum Austausch von Informationen in Schriftform zwischen Teilnehmern eines Kommunikationsnetzes wird beispielsweise der Dienst Electronic Mail oder E-Mail eingesetzt. E-Mail ist ein vom so genannten Internet, von welchem eine Gesamtheit aller miteinander verbundenen und das Transportprotokoll IP nutzenden Netzen dargestellt wird, zur Verfügung gestellter Dienst, bei dem eine elektronische Nachricht auf elektronischem Weg von einem Endgerät beispielsweise einem Computer eines Teilnehmers zu einem anderen Endgerät, z.B. einem Computer eines persönlich adressierten Teilnehmers, dem Empfänger, übertragen wird. Beim Empfänger werden die durch E-Mail übersendeten, elektronischen Nachrichten in einer speziellen Datei auf dem Computer gespeichert, so dass sie zu beliebiger Zeit abgerufen, angesehen und gegebenenfalls weiterverarbeitet werden können.

Der Aufbau einer mittels dem Dienst E-Mail übertragenen elektronischen Nachricht wird durch den Request for Comments RFC 2822 "Internet Message Format" der Internet Engineering Task Force IETF festgelegt. Eine elektronische Nachricht entsprechend diesem Format besteht aus einem so genannten Kopfteil oder Header und dem so genannten Message body oder Body.

Als Kopfteil oder Header wird jener Teil der elektronischen Nachricht bezeichnet, in dem keine Nutzdaten, sondern diverse Verwaltungsdaten enthalten sind. Solche Verwaltungsdaten sind beispielsweise Absender, Empfänger bzw. Kopieempfänger der elektronischen Nachricht, eine Kurzbeschreibung des Inhalts der elektronischen Nachricht - das so genannte Subject - oder Informationen über den Weg, welcher von der elektronischen Nachricht durch das Kommunikationsnetz genommen worden ist.

Der so genannte Message body oder Body der elektronischen Nachricht beinhaltet dann die eigentlichen Nutzdaten. Das sind jene Daten, von welchen die vom Sender eingegebene und für den Empfänger bestimmte Nachricht ohne jede Absender- oder Adressierungsinformation umfasst werden. Eventuell mitgesendete elektronische Dokumente, so genannte Attachments oder Dateianhänge, sind technisch gesehen ebenfalls Teil des Message bodys.

Elektronische Nachrichten werden auf Computern in einer speziellen Datei gespeichert, die auch als Mailbox bezeichnet wird. Die Mailbox ist eine Art Zwischenspeicher für übersendete, elektronische Nachrichten, von wo der Teilnehmer die elektronischen Nachrichten abrufen kann, um sie anzusehen, zu beantworten oder zu löschen. Mailboxsysteme bieten dem Teilnehmer auch die Möglichkeit seine elektronischen Nachrichten beispielsweise weiter zwischenzuspeichern, auszudrucken oder auch sie themenspezifisch zu ordnen, um einzelne elektronische Nachrichten bei Bedarf leichter wieder zu finden.

Im privaten, aber besonders im beruflichen Umfeld kommt dem Dienst E-Mail für Kommunikationszwecken, neben der direkten, zwischenmenschlichen Kommunikation und der Kommunikation über eine Kommunikationsverbindung in einem Telekommunikationsnetz eine immer größere Bedeutung zu. Laut dem Bericht "Informationstechnologie in Unternehmen und Haushalten 2004" des statistischen Bundesamtes wurde 2004 das Internet von 60% der Bevölkerung genutzt, wobei von 84% der Internetnutzer das Internet auch für Kommunikationszwecke wie z.B. das Versenden von elektronischen Nachrichten verwendet wurde.

Mittels E-Mail können nicht nur elektronische Nachrichten, sondern auch elektronische Dokumente zusammen mit dem Text der elektronischen Nachricht versendet werden. Auf diese Dokumente bzw. auf elektronische Nachrichten kann dann von den Teilnehmern beispielsweise während einer Kommunikationsverbindung in einem Telekommunikationsnetz Bezug genommen werden.

Heutzutage sind Arbeitsplätze oft mit einem Computer ausgestattet. So wurden laut dem Bericht "Informationstechnologie in Unternehmen und Haushalten 2004" des statistischen Bundesamtes in 84% der Unternehmen im Jahr 2004 Computer in den Geschäftsabläufen eingesetzt. Meist kann über diese Computer auch der Dienst E-Mail genutzt werden, denn laut dem oben angeführten Bericht wird von 78% der Unternehmen das Internet für Geschäftszwecke genutzt, von dem E-Mail als Dienst zur Verfügung gestellt wird. Außerdem sind heutzutage Arbeitsplätze meist mit einem Telekommunikationsendgerät ausgestattet. So besteht die Möglichkeit, dass von Teilnehmern während einer Kommunikationsverbindung über die Telekommunikationsendgeräte jene an sie gesendeten und in Mailboxen zwischengespeicherten, elektronischen Nachrichten durchgesehen werden, über die gerade gesprochen werden.

Ein Problem besteht allerdings darin, dass durch die steigende Anzahl an versendeten bzw. empfangenen elektronischen Nachrichten in Mailboxen immer mehr elektronische Nachrichten zwischengespeichert und verwaltet werden müssen. Auch wenn zwar die zwischengespeicherte elektronische Nachrichten vom Teilnehmer in Mailboxen themenspezifisch geordnet werden können, so wird es durch die Anzahl an elektronischen Nachrichten für Teilnehmer immer schwieriger, beispielsweise während einer themenbezogenen Kommunikationsverbindung wie z.B. bei einem Telefongespräch bestimmte elektronischen Nachrichten bzw. eventuell mit den elektronischen Nachrichten übersendete elektronische Dokumente zum jeweiligen Gesprächsthema zu finden. Manchmal besteht auch das Problem, dass elektronische Nachrichten zu einem bestimmten Thema vom Teilnehmer in unterschiedlichen Teilbereichen der Mailbox zwischengespeichert werden und daher dann nur schwierig oder gar nicht wieder gefunden werden.

Der vorliegenden Erfindung liegt daher die Aufgabe zugrunde, ein Verfahren sowie eine zur Durchführung des Verfahrens geeignete Vorrichtung anzugeben, durch welche für den angerufenen Teilnehmer die Suche nach elektronischen Nachrichten am Computerarbeitsplatz für themenbezogene Kommunikationsverbindungen in einem Kommunikationsnetze erleichtert wird.

Die Lösung dieser Aufgabe erfolgt erfindungsgemäß mit einem Verfahren zum Aufbau einer themenbezogenen Kommunikationsverbindung zwischen zwei Teilnehmern in einem Kommunikationsnetz, wobei zumindest der angerufene Teilnehmer zusätzlich zum Telekommunikationsendgeräte über einen für elektronische Nachrichten geeigneten Computerarbeitsplatz verfügt, wobei eine elektronische Nachricht beim Übersenden vom anrufenden zum angerufenen Teilnehmer mit einer themenbezogenen Kennung versehen wird, dann beim Aufbau einer Kommunikations-verbindung zwischen dem anrufenden Teilnehmer und dem angerufenen Teilnehmer im Kommunikationsnetz die themenbezogene Kennung vom anrufenden Teilnehmer angegeben werden kann, diese themenbezogene Kennung dann mit Rufinformationen mitgesendet wird, die themenbezogene Kennung vom Kommunikationsnetzwerk zum Computerarbeitsplatz des angerufenen Teilnehmers weitergeleitet wird, die themenbezogene Kennung am Computerarbeitsplatz ausgewertet wird und dem angerufenen Teilnehmer dann elektronische Nachrichten mit dieser themenbezogenen Kennung angezeigt werden.

Die mit dieser Erfindung erzielten Vorteile bestehen insbesondere darin, dass elektronische Nachrichten mit themenbezogenen Kennungen versehen werden, die vom anrufenden Teilnehmer bereits beim Rufaufbau eingeben werden können. Dem angerufenen Teilnehmer werden dann anhand dieser Kennung an einem Computerarbeitsplatz die zum Thema passenden elektronischen Nachrichten präsentiert, wodurch ihm eine mühsame Suche nach den elektronischen Nachrichten erspart wird. Außerdem wird verhindert, dass vom angerufenen Teilnehmer eventuell für das Thema wichtige elektronische Nachrichten nicht gefunden oder übersehen werden.

Bei einer bevorzugten Fortbildung der Erfindung wird im Kopfteil der elektronischen Nachricht ein eigenes Feld für die themenspezifische Kennung eingeführt, wodurch die themenspezifische Kennung automatisch beim Versenden einer elektronischen Nachricht mit den anderen Verwaltungsdaten wie z.B. Absender, Empfänger, etc. mitgesendet wird. Da der Aufbau einer mittels dem Dienst E-Mail übertragenen elektronischen Nachricht durch den Request for Comments RFC 2822 "Internet Message Format" der Internet Engineering Task Force IETF festgelegt wird, kann für die themenbezogene Kennung eine Feld entsprechend diesem Standard im Kopfteil eingeführt werden. Diese Feld kann beispielsweise eine eindeutige Nummer und optional mit einer Beschreibung versehen werden, wobei entweder automatisch die Beschreibung oder durch den Absender der elektronischen Mail eingetragen werden kann.

Es ist vorteilhaft, wenn das Kommunikationsnetz als Public Switched Telephone Network PSTN ausgestaltet ist, weil dieses weit verbreitet ist - besonders im Privatbereich oder im Bereich der Klein- und Mittelbetriebe.

Es ist außerdem günstig, wenn das Kommunikationsnetz als Integrated Service Digital Network ISDN ausgestaltet ist, weil es durch den Standard Q.931 der ITU-T, in dem das Signalisierungsprotokoll im ISDN spezifiziert wird, ermöglicht wird, die themenbezogene Kennung beim Gesprächsaufbau über die anrufspezifische Signalisierung mitzusenden.

Eine spezielle Ausführungsvariante des erfindungsgemäßen Verfahrens zeichnet sich dadurch aus, dass das Kommunikationsnetzwerk als Public Land Mobile Network PLMN ausgestaltet ist, da so die Teilnehmer durch die Verwendung von so genannten Mobiltelefonen nicht mehr ortgebunden sind. Allerdings sollte insbesondere für den angerufenen Teilnehmer sichergestellt sein, dass von ihm auf seine elektronischen Nachrichten zugegriffen werden kann. Dies kann durch den Einsatz von mobilen Personal Computern - so genannten Notebooks, die für den Anschluss an ein paketorientiertes Kommunikationsnetz mittels funktechnischen Einrichtungen ausgestattet sein können, erreicht werden.

Eine zweckmäßige Weiterentwicklung der Erfindung sieht vor, dass vom Kommunikationsnetz für den Aufbau der Kommunikationsverbindung zwischen den Teilnehmern das Session Initiation Protocol SIP, welches auf dem Internet Protocol IP basiert, eingesetzt wird. SIP wird als Protokoll für den Aufbau von Kommunikationsverbindungen für die Übertragung von Sprache (z.B. IP-Telefonie) in paketorientierten Kommunikationsnetzen verwendet und im Request for Comments RFC 3261 der Internet Engineering Task Force IETF spezifiert. Damit wird das auf dem Internet Protokoll basierende, paketorientierte Netz nicht nur zum Übertragen der elektronischen Nachrichten, sondern auch für die Sprachtelefonie eingesetzt, wodurch vorteilhafterweise die themenbezogene Kennung einfach für beide Dienste - E-Mail und IP-Telefonie - des paketorientierten Kommunikationsnetzes verwendet werden kann.

Weiters erfolgt die Lösung der Aufgabe auch durch eine Vorrichtung, welche zur Durchführung des erfindungsgemäßen Verfahrens eingerichtet ist und Mittel zur Eingabe der themenbezogenen Kennung durch den anrufenden Teilnehmer, Mittel zur Übertragung der themenbezogenen Kennung zum Kommunikationsnetz, Mittel zum Weiterleiten der themenbezogenen Kennung vom Kommunikationsnetz zum Computerarbeitsplatz des angerufenen Teilnehmers und Mittel zur Auswertung der themenbezogenen Kennung am Computerarbeitsplatz umfasst. Durch diese Vorrichtung kann einerseits vom anrufenden Teilnehmer die themenspezifische Kennung auf einfache Weise vor oder beim Aufbau der Kommunikationsverbindung eingegeben werden. Andererseits wird dem angerufenen Teilnehmer die mühsame Suche nach elektronischen Nachrichten zu einem bestimmten Thema während der Kommunikationsverbindung erspart.

Eine Fortbildung der erfindungsgemäßen Vorrichtung sieht vor, dass die Mittel zur Eingabe der themenbezogenen Kennung, die Mittel zur Übertragung der themenbezogenen Kennung an das Kommunikationsnetz und die Mittel zum Weiterleiten der themenbezogenen Kennung zum Computerarbeitsplatz in ein Telekommunikationsendgerätintegriert sind, wodurch vorteilhafterweise der anrufende Teilnehmer die themenbezogene Kennung auf seinem Telekommunikationsendgerät eingeben kann. Dies ist besonders bei der Verwendung eines Mobiltelefons von Vorteil, da dann vom anrufenden Teilnehmer kein Zugang zu einem Computer benötigt wird.

Eine spezielle Ausführungsvariante der erfindungsgemäßen Vorrichtung zeichnet sich dadurch aus, dass das Telekommunikationsendgerät in den Computerarbeitsplatz integriert ist, wodurch vom Teilnehmer nur mehr eine Endgerät, von dem über aller Funktionen zur Durchführung des erfindungsgemäßen Verfahrens verfügt wird, bedient werden muss.

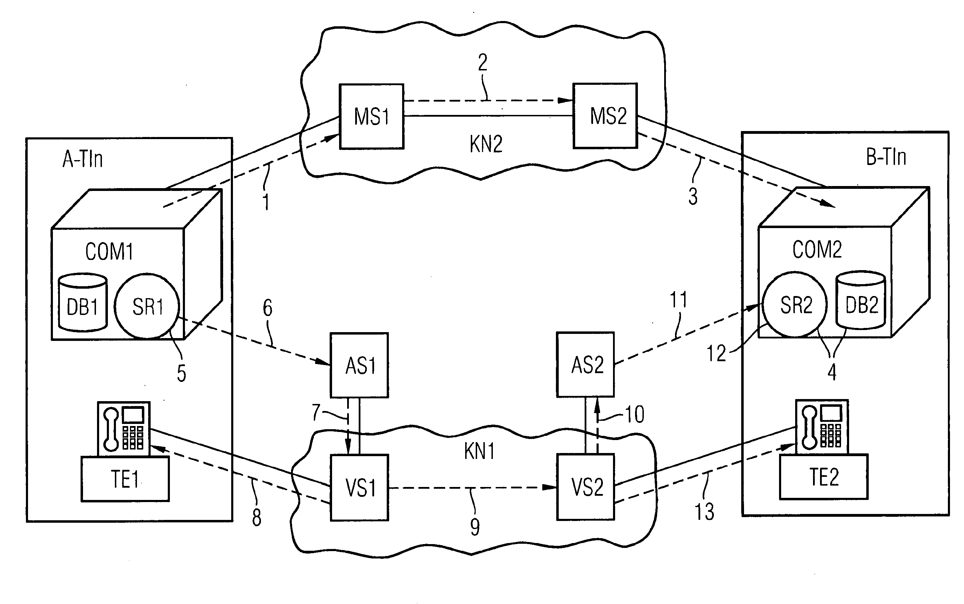

Die Erfindung wird nachfolgend in beispielhafter Weise unter Bezugnahme auf die beigefügte Figur näher erläutert.

In der Figur werden ein beispielhafter Ablauf des erfindungsgemäßen Verfahrens zum Aufbau einer themenbezogenen Kommunikationsverbindung sowie die beispielhafte Integration der Vorrichtung zur Durchführung des erfindungsgemäßen Verfahrens in ein Kommunikationsnetz KN1 gezeigt.

Das Kommunikationsnetz KN1, das als Telekommunikationsnetz ausgestaltet ist, umfasst beispielhaft zwei Vermittlungsstellen VS1 und VS2. An die Vermittlungsstelle VS1 ist neben einem Telekommunikationsendgeräte TE1 des anrufenden Teilnehmers A-Tln auch ein Applikationsserver AS1 angebunden, von dem themenbezogene Kennungen elektronischer Nachrichten vom Computerarbeitsplatz COM1 des anrufenden Teilnehmers A-Tln zum Kommunikationsnetz KN1 bzw. auch in umgekehrte Richtung weitergeleitet werden können. Der Computerarbeitsplatz COM1 des anrufenden Teilnehmers A-Tln umfasst eine zusätzliche Komponente SR1, über die einerseits themenbezogene Kennungen eingegeben werden können und von der anderseits vom Applikationsserver AS1 ankommende themenbezogene Kennungen ausgewertet werden, und eine Datenbank DB1 in der themenbezogenen Kennungen elektronischer Nachrichten abgespeichert werden.

Die Vermittlungsstelle VS2 ist mit einem Telekommunikationsendgerät TE2 des angerufenen Teilnehmers B-Tln verbunden. Zusätzlich ist an die Vermittlungsstelle VS2 ein Applikationsserver AS2 angebunden, von dem themenbezogene Kennungen elektronischer Nachrichten vom Kommunikationsnetz KN1 zum Computerarbeitsplatz COM2 des angerufen Teilnehmers B-Tln bzw. auch in umgekehrte Richtung weitergeleitet werden können. Der Computerarbeitsplatz COM2 des angerufen Teilnehmers B-Tln umfasst ebenfalls eine zusätzliche Komponente SR2, über die einerseits themenbezogene Kennungen eingegeben werden können und von der anderseits vom Applikationsserver AS2 ankommende themenbezogene Kennungen ausgewertet werden, und eine Datenbank DB2 in der themenbezogenen Kennungen elektronischer Nachrichten abgespeichert werden.

Zum Übertragen elektronischer Nachrichten ist ein Kommunikationsnetz KN2 vorgesehen, dass als IP basiertes Datennetz ausgestaltet ist. Vom Kommunikationsnetz KN2 werden z.B. mittels eines Protokolls Simple Mail Transfer Protocol SMTP in Kombination mit beispielsweise den Protokollen Post Office Protocol Version 3 POP3 bzw. Internet Message Access Protocol IMAP die elektronischen Nachrichten unter Verwendung von der Nachrichtenserver MS1, MS2 vom anrufenden Teilnehmer A-Tln zum angerufenen Teilnehmer B-Tln geleitet. An die Nachrichtenserver MS1 bzw. MS2 sind jeweils die Computerarbeitsplätze COM1 bzw. COM2 der Teilnehmer A-Tln, B-Tln angebunden.

In einem ersten Schritt 1 wird vom Computerarbeitsplatz COM1 des anrufenden Teilnehmers A-Tln eine elektronische Nachricht zu einem bestimmten Thema für den angerufenen Teilnehmer B-Tln zum Nachrichtenserver MS1 des Kommunikationsnetzes KN2 gesendet, wobei diese elektronische Nachricht in ihrem Kopfteil über ein eigenes Feld für eine themenbezogene Kennung verfügt. In einem zweiten Schritt 2 wird die elektronische Nachricht vom mit dem Computerarbeitsplatz COM1 verbundenen Nachrichtenserver MS1 zu dem mit dem Computerarbeitsplatz COM2 verbundenen Nachrichtenserver MS2 übertragen. Dann wird in einem dritten Schritt 3 die elektronische Nachricht vom Nachrichtenserver MS2 an den Computerarbeitsplatz COM2 weitergeleitet. In einem vierten Schritt 4 wird dann von der Komponente SR2 erkannt, dass von der empfangenen elektronischen Nachricht über eine themenbezogene Kennung verfügt wird und von der Komponente SR2 die themenbezogene Kennung in der Datenbank DB2 mit einem Verweis auf die zugehörige elektronische Nachricht abgelegt.

Wird nun vom anrufenden Teilnehmer A-Tln eine Kommunikationsverbindung zu einem bestimmten Thema zum angerufenen Teilnehmer B-Tln aufgebaut, so kann der anrufende Teilnehmer A-Tln in einem fünften Schritt 5 über die Komponente SR1 auf seinem Computerarbeitsplatz COM1 die themenbezogene Kennung für dieses Thema eingeben. In einem sechsten Schritt 6 wird dann die themenbezogene Kennung vom Computerarbeitsplatz COM1 an den Applikationsserver AS1 weitergeleitet. In einem siebenten Schritt 7 wird dann der Aufbau der Kommunikationsverbindung vom Applikationsserver AS1 bei der Vermittlungsstelle VS1 des Kommunikationsnetzes KN1 initiiert sowie die themenbezogene Kennung an die Vermittlungsstelle VS1 übergeben.

In einem achten Schritt 8 wird zunächst einmal die Kommunikationsverbindung zwischen der Vermittlungsstelle VS1 und dem Telekommunikationsendgerät TE1 des anrufenden Teilnehmers A-Tln aufgebaut. Dann wird in einem neunten Schritt 9 die Verbindung zwischen den Vermittlungsstellen VS1 und VS2 im Kommunikationsnetz KN1 hergestellt und dabei die themenbezogene Kennung gemeinsam mit Rufinformationen übertragen.

Von der Vermittlungsstelle VS2 wird dann in einem zehnten Schritt 10 der Applikationsserver AS2 mit der Kommunikationsverbindung getriggert und an ihn die themenbezogene Kennung übermittelt. In einem elften Schritt 11 wird dann diese themenbezogene Kennung vom Applikationsserver AS2 an den Computerarbeitsplatz COM2 des angerufenen Teilnehmers B-Tln übertragen. Dort wird dann in einem zwölften Schritt 12 die themenbezogene Kennung von der Komponente SR2 ausgewertet und nach zugehörigen elektronischen Nachrichten am Computerarbeitsplatz COM2 gesucht, welche dann dem angerufenen Teilnehmer B-Tln angezeigt werden können. In einem dreizehnten Schritt 13 wird dann noch die Kommunikationsverbindung zwischen der Vermittlungsstelle VS2 und dem Telekommunikationsendgerät TE2 des angerufenen Teilnehmers aufgebaut.

Die Applikationsserver AS1 bzw. AS3 können allerdings auch direkt in die Telekommunikationsendgeräte TE1, TE2 des anrufenden bzw. angerufenen Teilnehmer A-Tln bzw. B-Tln integriert werden. Dadurch wird das erfindungsgemäße Verfahren dahingehend vereinfacht, dass die Schritte 7 und 8 in einem Schritt durchgeführt werden, da gleich beim Aufbau der Kommunikationsverbindung zwischen dem Telekommunikationsendgerät des anrufenden Teilnehmers A-Tln und der Vermittlungsstelle VS1 die themenbezogene Kennung mitgesendet wird. Ebenfalls werden durch diese Integration die Schritte 10 und 13 in einem Schritt durchgeführt, weil die Kommunikationsverbindung zwischen der Vermittlungsstelle VS2 und dem Telekommunikationsendgeräte TE2 des angerufenen Teilnehmers gleich beim Übersenden der themenbezogenen Kennung aufgebaut wird. Die Schritt 11 und 12 werden dann im Anschluss an diesen Schritt durchgeführt.

## Patentansprüche

1. Verfahren zum Aufbau einer themenbezogenen Kommunikationsverbindung zwischen zwei Teilnehmern (A-Tln, B-Tln) in einem Kommunikationsnetz (KN1), wobei zumindest der angerufene Teilnehmer (B-Tln) zusätzlich zum Telekommunikationsendgeräte (TE2) über einen für elektronische Nachrichten geeigneten Computerarbeitsplatz (COM2) verfügt,
bei dem eine elektronische Nachricht beim übersenden vom anrufenden (A-Tln) zum angerufenen Teilnehmer (B-Tln) mit einer themenbezogenen Kennung versehen wird (1, 2, 3), und dem angerufenen Teilnehmer (B-Tln) dann elektronische Nachrichten mit dieser themenbezogenen Kennung angezeigt werden (12),
**dadurch gekennzeichnet, dass**
dann beim Aufbau einer Kommunikationsverbindung (8, 9, 13) zwischen dem anrufenden Teilnehmer (A-Tln) und dem angerufenen Teilnehmer (B-Tln) im Kommunikationsnetz (KN1) die themenbezogene Kennung vom anrufenden Teilnehmer (A-Tln) angegeben werden kann (5),
- diese themenbezogene Kennung dann mit Rufinformationen mitgesendet wird (6, 7, 9), und
- die themenbezogene Kennung vom Kommunikationsnetzwerk (KN1) zum Computerarbeitsplatz (COM2) des angerufenen Teilnehmers (B-Tln) weitergeleitet und dort ausgewertet wird (10, 11).

2. Verfahren nach Anspruch 1, **dadurch gekennzeichnet, dass** im Kopfteil der elektronischen Nachricht ein eigenes Feld für die themenbezogene Kennung eingeführt wird.

3. Verfahren nach einem der Ansprüche 1 bis 2, **dadurch gekennzeichnet, dass** das Kommunikationsnetz (KN1) als Public Switched Telephone Network PSTN ausgestaltet ist.

4. Verfahren nach einem der Ansprüche 1 bis 2, **dadurch gekennzeichnet, dass** das Kommunikationsnetz (KN1) als Integrated Service Digital Network ISDN ausgestaltet ist.

5. Verfahren nach einem der Ansprüche 1 bis 2, **dadurch gekennzeichnet, dass** das Kommunikationsnetz (KN1) als Public Land Mobile Network PLMN ausgestaltet ist.

6. Verfahren nach einem der Ansprüche 1 bis 2, **dadurch gekennzeichnet, dass** vom Kommunikationsnetz (KN1) für den Aufbau der Kommunikationsverbindung (8, 9, 13) zwischen den Teilnehmern (A-Tln, B-Tln) das Session Initiation Protocol SIP, welches auf dem Internet Protocol IP basiert, eingesetzt wird.

## Claims

1. Method for establishing a subject-related communication link between two subscribers (A-Tln, B-Tln) in a communication network (KN1), wherein at least the called subscriber (B-Tln), in addition to the telecommunication terminal (TE2), has a computer workstation (COM2) suitable for electronic messages, in which an electronic message is provided with a subject-related identifier (1, 2, 3) during the transmission from the calling subscriber (A-Tln) to the called subscriber (B-Tln), and electronic messages with this subject-related identifier are then displayed (12) to the called subscriber (B-Tln), **characterized in that** then, during the establishment of a communication link (8, 9, 13) between the calling subscriber (A-Tln) and the called subscriber (B-Tln) in the communication network (KN1), the subject-related identifier can be specified (5) by the calling subscriber (A-Tln),
- this subject-related identifier is then sent along with call information (6, 7, 9), and
- the subject-related identifier is forwarded by the communication network (KN1) to the computer workstation (COM2) of the called subscriber (B-Tln) and is evaluated at the computer workstation (10, 11).

2. Method as claimed in Claim 1, **characterized in that** a separate field for the subject-related identifier is introduced in the header of the electronic message.

3. Method as claimed in one of Claims 1 to 2, **characterized in that** the communication network (KN1) is arranged as Public Switched Telephone Network PSTN.

4. Method as claimed in one of Claims 1 to 2, **characterized in that** the communication network (KN1) is arranged as Integrated Services Digital Network ISDN.

5. Method as claimed in one of Claims 1 to 2, **characterized in that** the communication network (KN1) is arranged as Public Land Mobile Network PLMN.

6. Method as claimed in one of Claims 1 to 2, **characterized in that** the communication network (KN1) uses, for the establishment of the communication link (8, 9, 13) between the subscribers (A-Tln, B-Tln), the Session Initiation Protocol SIP which is based on the Internet Protocol IP.

## Revendications

1. Procédé pour établir une liaison de communication relative à un thème entre deux usagers (A-Tln, B-Tln) dans un réseau de communication (KN1), au moins l'usager appelé (B-Tln) disposant, en plus du terminal de télécommunication (TE2), d'un poste de travail informatique (COM2) adapté à des messages électroniques, dans lequel un message électronique, lors de la transmission de l'usager appelant (A-Tln) vers l'usager appelé (B-Tln), est pourvu (1, 2, 3) d'un identifiant relatif à un thème et des messages électroniques avec cet identifiant relatif à un thème sont alors signalés (12) à l'usager appelé (B-Tln),
**caractérisé en ce que**
- lors de l'établissement d'une liaison de communication (8, 9, 13) entre l'usager appelant (A-Tln) et l'usager appelé (B-Tln) dans le réseau de communication (KN1), l'identifiant relatif à un thème peut être indiqué (5) par l'usager appelant (A-Tln),
- cet identifiant relatif à un thème est alors envoyé (6, 7, 9) avec des informations d'appel et
- l'identifiant relatif à un thème est retransmis du réseau de communication (KN1) au poste de travail informatique (COM2) de l'usager appelé (B-Tln) et y est évalué (10, 11).

2. Procédé selon la revendication 1, **caractérisé en ce qu'**est inséré, dans l'en-tête du message électronique, un champ spécifique à l'identifiant relatif à un thème.

3. Procédé selon l'une des revendications 1 à 2, **caractérisé en ce que** le réseau de communication (KN1) se présente sous la forme d'un «Public Switched Telephone Network» PSTN.

4. Procédé selon l'une des revendications 1 à 2, **caractérisé en ce que** le réseau de communication (KN1) se présente sous la forme d'un «Integrated Service Digital Network» ISDN.

5. Procédé selon l'une des revendications 1 à 2, **caractérisé en ce que** le réseau de communication (KN1) se présente sous la forme d'un «Public Land Mobile Network» PLMN.

6. Procédé selon l'une des revendications 1 à 2, **caractérisé en ce que** le réseau de communication (KN1), pour établir la liaison de communication (8, 9, 13) entre les usagers (A-Tln, B-Tln), met en oeuvre le «Session Initiation Protocol» SIP basé sur le protocole Internet IP.
